# EUROPÄISCHE PATENTANMELDUNG

(11) **EP 1 252 958 A1**
(43) Veröffentlichungstag der Anmeldung: **30.10.2002**
(21) Anmeldenummer: 02007452.2
(22) Anmeldetag: 30.03.2002
(51) Int. Cl.: B23D 79/00

(54) **Anlage zur thermischen Behandlung von Werkstücken mit einem exposiven Gasgemisch, insbesondere thermische Entgratanlage**

(30) Priorität: 04.04.2001 DE 10116726
(71) Anmelder: ROBERT BOSCH GMBH, 70442 Stuttgart (DE)
(72) Erfinder: Kaercher, Jochen, 70378 Stuttgart (DE); Breitbach, Benedikt, 71254 Ditzingen (DE)

(57) **Zusammenfassung**

Es wird eine Anlage zur thermischen Behandlung von Werkstücken mit einem explosivem Gasgemisch, insbesondere eine thermische Entgratanlage, vorgeschlagen. Die Anlage weist eine Bearbeitungskammer (10) auf, die einen Brennraum (12) zur Aufnahme der Werkstücke enthält. In den Brennraum (12) mündet ein Zuführkanal (18) für das Gasgemisch. Im Brennraum (12) ist eine Einrichtung vorgesehen, die eine Vielzahl an Öffnungen (28) aufweist, durch die die Flammfront zur thermischen Behandlung der Werkstücke tritt. Dies kann zum Beispiel eine sich an den Zuführkanal (18) anschließende Einrichtung, vorzugsweise in Form eines Rohrs (26), mit einer Vielzahl an Öffnungen (28), zum Beispiel aus Lochblech, sein. Dies hat den Vorteil, dass an den Werkstücken ein gleichmäßigeres Bearbeitungs- bzw. Entgratergebnis erzielt wird, da die Flammfront aus den vielen kleinen Öffnungen der Einrichtung tritt. Die kleinen Öffnungen (28) dienen auch als Drosseln, wodurch die Verbrennung insgesamt langsamer abläuft.

## Beschreibung

### Stand der Technik

Die Erfindung geht aus von einer Anlage zur thermischen Behandlung von Werkstücken mit einem explosivem Gasgemisch, insbesondere einer thermischen Entgratanlage, nach dem Oberbegriff des Hauptanspruchs.

Eine derartige Anlage, wie sie beispielsweise aus der EP 0 211 848 B1 bekannt ist, weist eine Bearbeitungskammer auf, die einen Brennraum zur Aufnahme der Werkstücke enthält. An einen Zuführkanal schließt sich ein System aus mehreren Kanälen an, die an verschiedenen Stellen in den Brennraum münden. Dieses System aus Kanälen bewirkt eine zusätzliche Durchmischung des Gasgemisches. Außerdem wird die von der Zündstelle ausgehende und den Zuführkanal durchlaufende Flammfront vor ihrem Eintritt in den Brennraum in mehrere Flammstrahlen aufgespalten. Die Flammstrahlen treten an verschiedenen Stellen in den Brennraum ein, wodurch ein relativ großes Gemischvolumen gleichzeitig entzündet wird. Es besteht aber die Möglichkeit, dass einer dieser Flammstrahlen auf ein einzelnes Werkstück oder einen Bereich des Werkstücks trifft, wodurch das Bearbeitungs- bzw. Entgratergebnis ungleichmäßig werden kann.

### Vorteile der Erfindung

Die erfindungsgemäße Anlage zur thermischen Behandlung von Werkstücken mit einem explosivem Gasgemisch, insbesondere thermische Entgratanlage, mit den kennzeichnenden Merkmalen des Hauptanspruchs hat demgegenüber den Vorteil, dass an den Werkstücken ein gleichmäßigeres Bearbeitungs- bzw. Entgratergebnis erzielt wird, da im Brennraum eine Einrichtung vorgesehen ist, die eine Vielzahl an Öffnungen aufweist, durch die die Flammfront zur thermischen Behandlung der Werkstücke tritt. Vorzugsweise wird hierbei der Brennraum durch die Einrichtung in zwei Bereiche aufgeteilt, wobei die Werkstücke im einen Bereich angeordnet sind und die Flammfront im andern Bereich ausgelöst wird. In einer vorteilhaften Weiterbildung schließt sich die Einrichtung an den Zuführkanal an. Dadurch kann eine bestehende Anlage, deren Zündquelle - zum Beispiel in Form einer Zündkerze - im Zündkanal angeordnet ist, auf einfache Weise zu einer erfindungsgemäßen Anlage umgebaut werden.

Da die Flammfront aus vielen kleinen Öffnungen der Einrichtung tritt, ist sie im Verhältnis zum Volumen des Brennraums recht groß. Die kleinen Öffnungen dienen auch als Drosseln, wodurch die Verbrennung insgesamt langsamer abläuft, was schonender für die Werkstücke ist.

In einer bevorzugten Weiterbildung der Erfindung ist die Einrichtung als Rohr ausgebildet. Dadurch heben sich die Kräfte, die durch die Druckwelle entstehen, gegenseitig auf. Das Rohr lässt sich auch besonders einfach auf einer Aufnahme des Verschlusses der Bearbeitungskammer anbringen und kann leicht gewechselt werden.

Weitere Vorteile und vorteilhafte Weiterbildungen der erfindungsgemäßen Anlage zur thermischen Behandlung von Werkstücken mit einem explosivem Gasgemisch, insbesondere thermische Entgratanlage, ergeben sich aus den Unteransprüchen und der Beschreibung.

### Zeichnung

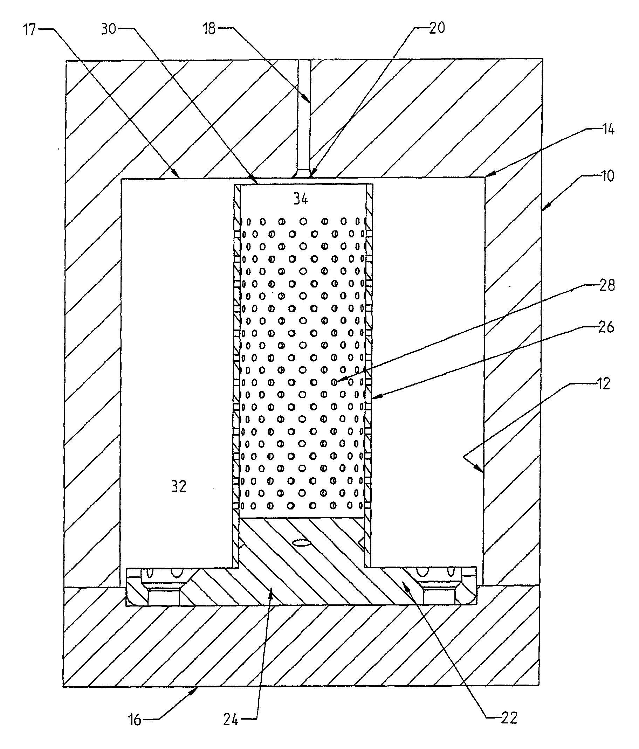

Ein Ausführungsbeispiel der Erfindung ist in der Zeichnung dargestellt und in der nachfolgenden Beschreibung näher erläutert. In der einzigen Figur ist eine Bearbeitungskammer einer Anlage zur thermischen Behandlung von Werkstücken mit einem explosivem Gasgemisch, insbesondere einer thermischen Entgratanlage gezeigt.

### Beschreibung des Ausführungsbeispiels

In der Figur ist eine Bearbeitungskammer 10 einer nicht dargestellten Anlage zur thermischen Behandlung von Werkstücken mit einem explosivem Gasgemisch, insbesondere thermische Entgratanlage, gezeigt. In diesem Zusammenhang wird ausdrücklich auf die EP 0 211 848 B1 oder US 4,740,152 verwiesen, wo der prinzipielle Aufbau und die Arbeitsweise derartiger Anlagen ausführlich geschildert ist.

Die Bearbeitungskammer 10 enthält einen Brennraum 12 zur Aufnahme der nicht dargestellten Werkstücke. Die Bearbeitungskammer 10 besteht aus einer Glocke 14, die vorzugsweise rund bzw. topfförmig ausgebildet ist, und einem Verschluß in Form eines unter der Glocke 14 angeordneten Schließtellers 16. Dadurch ergibt sich eine zylindrische Form des Brennraums 12, wobei auch Formen mit runder oder eckiger sowie in Längsrichtung konstanter oder sich ändernder Querschnittsfläche denkbar sind.

Vorzugsweise in der oberen, flachen Seite 17 der Glocke 14 der Bearbeitungskammer 10 ist ein Zuführkanal 18 für ein Gasgemisch ausgebildet, der in den Brennraum 12 mündet und somit eine Mündung 20 bildet.

Durch den Schließteller 16 lässt die Bearbeitungskammer 10 zur Entnahme bearbeiteter Werkstücke und zur Bestückung mit zu bearbeitenden Werkstücken öffnen und schließen. Vorzugsweise ist auf dem Schließteller 16 eine Grundplatte 22 mit einer im Brennraum 12 angeordneten Aufnahme 24 zur Befestigung einer Einrichtung in Form eines Rohrs 26 mit einer Vielzahl kleiner seitlicher Öffnungen 28 vorgesehen. Die Aufnahme 24 ist im vorliegenden Ausführungsbeispiel ein Zapfen, auf den das Rohr 26 gesteckt wird. Alternativ kann das Rohr 26 jedoch auch in eine Senkung in der Grundplatte 22 gesteckt werden. Dadurch erstreckt sich das Rohr 26 im Wesentlichen von der Mündung 20 des Zuführkanals 18 bis zur Grundplatte 22 bzw. dem Verschluß in Form des Schließtellers 16. Alternativ kann das Rohr 26 auch direkt auf dem Verschluß bzw. dem Schließteller 16 angeordnet sein. Es ist ebenfalls möglich, das Rohr 26 an der Glocke 14 selbst zu befestigen.

Es kann auch vorkommen, dass sich die Mündung 20 und die Grundplatte 22 bzw. der Verschluß der Bearbeitungskammer 10 nicht gegenüberliegen. Vorteilhaft ist dann jedoch, dass sich das in den Brennraum 12 ragende Rohr 26 im Wesentlichen von der Mündung 20 des Zuführkanals 18 im Brennraum 12 zu der Seite des Brennraums 12, die der Mündung 20 gegenüberliegt, erstreckt; wesentlich bedeutet hierbei, dass das Rohr 26 auch kürzer sein kann, als der Abstand zwischen der Mündung 20 und der gegenüberliegenden Seite. Dadurch ist zum Beispiel die Gefahr vermindert, dass sich fertigungsbedingte Toleranzen negativ auswirken, indem das Rohr 26 zu lang ist.

Wie in der Figur dargestellt, kann zwischen der Mündung 20 und dem Rohr 26 ein Spalt 30 vorhanden sein. Wesentlich ist jedoch vor allem, dass sich das Rohr 26 an den Zuführkanal 18 bzw. dessen Mündung 20 anschließt und eine Vielzahl seitlicher Öffnungen 28 aufweist. Vorzugsweise durchdringt das Rohr 26 den gesamten Brennraum 12.

Das Rohr 26 ist aufgrund des zylindrischen Brennraums 12 ebenfalls zylindrisch geformt. Das Rohr 26 kann jedoch zum Beispiel auch eine in Längsrichtung das Rohr in Längsrichtung gesehen auch eine runde oder eckige sowie konstante oder sich ändernde Querschnittsfläche haben kann. Vorzugsweise ist das Material des Rohrs 26 hitzebeständig. Damit das Rohr 26 eine Vielzahl von seitlichen Öffnungen 28 aufweist, ist es im vorliegenden Ausführungsbeispiel aus perforiertem Blech vorzugsweise in Form von Lochblech hergestellt, wobei auch die Verwendung von Streckmetall möglich ist. Alternativ können Metalldrahtgewebe verwendet werden, die eventuell durch Stäbe armiert werden. Ein Rohr 26 aus Lochblech bzw. perforiertem Blech ist jedoch einfacher herzustellen und in sich ausreichend stabil.

Bei der thermischen Behandlung von Werkstücken mit einem explosiven Gasgemisch, insbesondere beim thermischen Entgraten, werden zunächst ein oder mehrere Werkstücke auf die Grundplatte 22 der geöffneten Bearbeitungskammer 10 gelegt oder in einer auf der Grundplatte 22 angeordneten Halterung angebracht. Danach wird die Bearbeitungskammer 10 bzw. der Brennraum 12 geschlossen. Nun werden Sauerstoff und ein Brenngas gemischt und über den Zuführkanal 18 in den Brennraum 12 geleitet, wo es sich gleichmäßig verteilt. Bezüglich der Einzelheiten der Mischung, Zuleitung und Zündung des Gasgemisches wird ausdrücklich auf die EP 0 211 848 bzw. US 4,740,152 verwiesen.

Das Gasgemisch wird über eine nicht dargestellte, im Zuführkanal 18 angeordnete Zündkerze gezündet. Die Flamme schlägt dann aus der Mündung in das Rohr 26. Da die dabei entstehende Flammfront danach aus den vielen seitlichen Öffnungen 28 über die gesamte Länge des Rohrs 26 in den Brennraum 12 tritt, ist sie ist im Verhältnis zum Volumen des Brennraums 12 recht groß. Die kleinen Öffnungen 28 dienen auch als Drosseln, wodurch die Verbrennung insgesamt langsamer abläuft. Dadurch wird an den Werkstücken ein gleichmäßigeres Bearbeitungs- bzw. Entgratergebnis erzielt.

Wesentlich ist, dass der Brennraum 12 durch das Rohr 26 in zwei Bereiche 32, 34 aufgeteilt wird. Im einen Bereich 32, d.h. außerhalb des Rohrs 26 sind die Werkstücke angeordnet. Im andern Bereich 34, der sich an den Zuführkanal 18 anschließt, d.h. innerhalb des Rohrs 26, wird die auf die Werkstücke treffende Flammfront ausgelöst. Vom Bereich 34 her tritt die Flammfront recht gleichmäßig durch die Öffnungen 28 zur thermischen Behandlung bzw. zum Entgraten der Werkstücke. Es ist aber auch eine umgekehrte Anordnung möglich, d.h., dass die Werkstücke innerhalb des Rohrs 26 angeordnet sind und die Flammfront durch eine außerhalb des Rohrs 26 angeordnete Zündquelle ausgelöst wird.

Statt des Rohrs 26 kann auch eine ebene oder gewölbte Einrichtung mit einer Vielzahl von Öffnungen 28 zum Durchtritt der Flammfront zur thermischen Behandlung der Werkstücke vorgesehen sein. Wesentlich ist, dass der Brennraum 12 durch die Einrichtung so aufgeteilt ist, dass die Flammfront für den Bearbeitungsvorgang im Zusammenhang mit der Beschaffenheit der Werkstücke optimiert wird. Wichtig hierbei ist, dass der Brennraum 12 durch die Einrichtung in zwei Bereiche 32, 34 aufgeteilt ist, wobei die Werkstücke im einen Bereich 32 angeordnet sind und die Flammfront im andern Bereich 34 ausgelöst wird. Vorzugsweise sollte die Flammfront möglichst groß werden.

Es ist also auch möglich, dass die Flammfront nicht an der Stelle, an der sie aus dem Zuführkanal 18 austritt, ausgelöst wird. Die Flammfront könnte auch an der anderen Seite ausgelöst werden. Zum Beispiel kann am Verschluß oder an der Grundplatte 22 eine Einrichtung in Form eines hohlen Kegels mit einer Vielzahl an Öffnungen 28 angeordnet sein, in dem eine Zündquelle - zum Beispiel in Form einer Zündkerze - vorgesehen ist. Die Werkstücke sind dabei außerhalb des Kegels angeordnet. Wesentlich ist, dass die Flammfront zuerst durch die Einrichtung tritt und dann zur Bearbeitung auf die Werkstücke trifft.

Am Besten geeignet ist jedoch das Rohr 26, da die durch die Druckwelle der Explosion erzeugten Kräfte diametral nach außen gerichtet sind und sich gegenseitig aufheben. Außerdem lässt sich das Rohr 26 leichter wechseln.

## Patentansprüche

1. Anlage zur thermischen Behandlung von Werkstücken mit einem explosiven Gasgemisch, insbesondere thermische Entgratanlage, mit einer Bearbeitungskammer (10), die einen Brennraum (12) zur Aufnahme der Werkstücke enthält, in die ein Zuführkanal (18) für das Gasgemisch mündet, **dadurch gekennzeichnet, dass** im Brennraum (12) eine Einrichtung vorgesehen ist, die eine Vielzahl von Öffnungen (28) aufweist, durch die die Flammfront zur thermischen Behandlung der Werkstücke tritt.

2. Anlage nach Anspruch 1, **dadurch gekennzeichnet, dass** der Brennraum (12) durch die Einrichtung in zwei Bereiche (32, 34) aufgeteilt ist, wobei die Werkstücke im einen Bereich (32) angeordnet sind und die Flammfront im andern Bereich (34) ausgelöst wird.

3. Anlage nach Anspruch 1 oder 2, **dadurch gekennzeichnet, dass** sich die Einrichtung an den Zuführkanal (18) anschließt.

4. Anlage nach einem der Ansprüche 1 bis 3, **dadurch gekennzeichnet, dass** sich an den Zuführkanal (18) ein Rohr (26) anschließt, das eine Vielzahl seitlicher Öffnungen (28) aufweist.

5. Anlage nach Anspruch 4, **dadurch gekennzeichnet, dass** sich das Rohr (26) im Wesentlichen von der Mündung (20) des Zuführkanals (18) zu der der Mündung gegenüberliegenden Seite des Brennraums (12) erstreckt.

6. Anlage nach Anspruch 4 oder 5, **dadurch gekennzeichnet, dass** das Rohr (26) am Verschluß (16) der Entgratkammer (10) befestigt ist.

7. Anlage nach einem der Ansprüche 1 bis 6, **dadurch gekennzeichnet, dass** die Einrichtung aus Lochblech ist.

8. Anlage nach einem der Ansprüche 1 bis 6, **dadurch gekennzeichnet, dass** die Einrichtung aus Metalldrahtgewebe ist.

9. Anlage nach einem der Ansprüche 1 bis 8, **dadurch gekennzeichnet, dass** die Öffnungen (28) die Flammfront drosseln.
